(19) **Europäisches Patentamt**
**European Patent Office**
**Office européen des brevets**

(11) **EP 4 122 777 A1**

(12) **EUROPÄISCHE PATENTANMELDUNG**

(43) Veröffentlichungstag:
**25.01.2023 Patentblatt 2023/04**

(21) Anmeldenummer: **22182963.3**

(22) Anmeldetag: **05.07.2022**

(51) Internationale Patentklassifikation (IPC):
**B60R 16/02** (2006.01)  **B60R 16/03** (2006.01)
**H01B 13/012** (2006.01)

(52) Gemeinsame Patentklassifikation (CPC):
**B60R 16/0207; B60R 16/0215; B60R 16/03;**
H01B 13/012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.07.2021 DE 102021118814**

(71) Anmelder: **Lisa Dräxlmaier GmbH**
**84137 Vilsbiburg (DE)**

(72) Erfinder: **WORTBERG, Michael**
**84405 Dorfen (DE)**

(54) **VERFAHREN ZUM ENTFLECHTEN EINES ELEKTRISCHEN LEITUNGSSATZES**

(57) Die Offenbarung betrifft ein Verfahren zum Entflechten eines elektrischen Leitungssatzes mit einer Mehrzahl von elektrischen Steckverbindern zum Verbinden von Bordnetz-Entitäten eines Bordnetzes eines Fahrzeugs gemäß einer Verbindungscharakteristik, wobei das Verfahren folgendes umfasst: Ausgliedern der Steckverbinder einer ersten Bordnetz-Entität aus der Verbindungscharakteristik zum Erstellen einer reduzierten Verbindungscharakteristik ohne die ausgegliederten Steckverbinder sowie einer hilfsweisen Verbindungscharakteristik mit den ausgegliederten Steckverbindern; Aufteilen der Steckverbinder der reduzierten Verbindungscharakteristik in eine Mehrzahl von Leitungssatzmodulen eines äußeren Leitungssatzes; Bestimmen von Clustern von Steckverbindern in der hilfsweisen Verbindungscharakteristik; Ausformen einer Verbindungsentität für einen jeden Cluster zum Verbinden der Steckverbinder des jeweiligen Clusters; Verbinden der Verbindungsentitäten der Cluster untereinander zum Ausformen eines inneren Leitungssatzes; und Ausbilden von Fertigungsmodulen basierend auf der Mehrzahl von Leitungssatzmodulen des äußeren Leitungssatzes und den Verbindungsentitäten des inneren Leitungssatzes.

Fig. 4

EP 4 122 777 A1

**Beschreibung**

**Technisches** Gebiet

Die vorliegende Erfindung betrifft ein Verfahren zum Entflechten eines elektrischen Leitungssatzes zum Verbinden von Bordnetz-Entitäten eines Bordnetzes eines Fahrzeugs, insbesondere ein Verfahren zum Entflechten des elektrischen Leitungssatzes in einen inneren Leitungssatz und einen äußeren Leitungssatz. Die Erfindung betrifft ferner einen modularen elektrischen Leitungssatz, der insbesondere mit einem derartigen Verfahren hergestellt wird.

Stand der Technik

Heutige Haupt-Leitungssätze weisen eine tiefe Vermaschung auf. Diese tiefe Vermaschung sorgt dafür, dass der große Haupt-Leitungssatz nicht in abgeschlossene, für die automatisierte Fertigung optimierte Module unterteilt werden kann. Einige zentrale Verteilungspunkte im Bordnetz führen zu einer Vermaschung. So haben Stromverteiler jeweils eine Versorgungsleitung zu einem Großteil der Stecker. Zu diesen Steckern gehören dann Leitungen, die jeweils zu anderen Steckern gehen. Neben den Stromverteilern sind CAN-Sternpunktkoppler, zentrale Steuergeräte mit großen Steckern und Verbindungen zu vielen anderen Steckern und Massepunkte die Ursache einer tiefen Vermaschung.

**Beschreibung der Erfindung**

Eine Aufgabe der Erfindung ist es daher, ein vorteilhaftes Konzept zur verbesserten Modularisierung in der Leitungssatzfertigung zu schaffen, insbesondere ein Konzept, bei dem sich der große Haupt-Leitungssatz im Fahrzeug-Bordnetz effizient in abgeschlossene, für die automatisierte Fertigung optimierte Module unterteilen lässt.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf einem Layer Prinzip. Die Verteiler/Steuergeräte, die die Knoten der Vermaschung darstellen, werden von einem Algorithmus auf einen virtuellen Layer verschoben. Die im reellen Layer verbleibenden Leitungssatz-Anteile können nun an beliebiger (günstigster) Stelle auf einzelne Verbindungen der im virtuellen Layer "aufgelösten" Entitäten (z.B. Energieverteilung) zugreifen, ohne dass dadurch eine Vermaschung entsteht. Auf dem virtuellen Layer ist dann zu erkennen, an welchen Positionen und zu welcher Entität der einzelne Zugriff aus dem reellen Layer erfolgt. Auf dem virtuellen Layer kann somit eine Clusterung erfolgen. Die singulären Entitäts-Zugriffe können also gemäß der Schwerpunkt-Cluster zu einem DPI (Data-Power-Interface) pro Cluster zusammengefasst werden. Ein DPI bietet dann z.B. für das Cluster die Klemme 30, 15, CANx und Lin an. Die so durch Clustering auf dem virtuellen Layer gefundenen DPIs werden nun auf das reelle Layer transferiert. Die so hergeleiteten DPI benötigen untereinander einen Verbindungs-Backbone, der die Verbindungen der auf die DPIs verteilten und zerlegten Entitäten wiederherstellt. Diese Verbindungen bilden den "inneren Leitungssatz".

Mit dieser erfinderischen Lösung ergeben sich die folgenden technischen Vorteile:
Über den hier beschriebenen Algorithmus wird die optimale Partitionierung der DPIs und deren Schnittstellen bestimmt. DPIs und automatisiert gefertigte Leitungssatzmodule sind die Produkte des Bordnetzes der Zukunft.

Während bisher die Module vor der Bauteilfertigung nur einmal im Vorhinein bestimmt wurden, können sie mit dem hier vorgestellten Algorithmus auch dynamisch für jedes Fahrzeug neu und optimal bestimmt werden und in einer durchgängig digitalisierten Fertigung an die Automaten weitergegeben werden.

Gemäß einem ersten Aspekt wird die oben beschriebene Aufgabe gelöst durch ein Verfahren zum Entflechten eines elektrischen Leitungssatzes mit einer Mehrzahl von elektrischen Steckverbindern zum Verbinden von Bordnetz-Entitäten eines Bordnetzes eines Fahrzeugs gemäß einer Verbindungscharakteristik, wobei das Verfahren folgendes umfasst: Ausgliedern der Steckverbinder einer ersten Bordnetz-Entität aus der Verbindungscharakteristik zum Erstellen einer reduzierten Verbindungscharakteristik ohne die ausgegliederten Steckverbinder sowie einer hilfsweisen Verbindungscharakteristik mit den ausgegliederten Steckverbindern; Aufteilen der Steckverbinder der reduzierten Verbindungscharakteristik in eine Mehrzahl von Leitungssatzmodulen eines äußeren Leitungssatzes; Bestimmen von Clustern von Steckverbindern in der hilfsweisen Verbindungscharakteristik; Ausformen einer Verbindungsentität für einen jeden Cluster zum Verbinden der Steckverbinder des jeweiligen Clusters; Verbinden der Verbindungsentitäten der Cluster untereinander zum Ausformen eines inneren Leitungssatzes; und Ausbilden von Fertigungsmodulen basierend auf der Mehrzahl von Leitungssatzmodulen des äußeren Leitungssatzes und den Verbindungsentitäten des inneren Leitungssatzes.

Mit diesem Verfahren wird ein vorteilhaftes Konzept zur verbesserten Modularisierung in der Leitungssatzfertigung realisiert. Der große Haupt-Leitungssatz im Fahrzeug-Bordnetz lässt sich damit effizient in abgeschlossene, für die automatisierte Fertigung optimierte Module unterteilen.

Ferner wird mit diesem Verfahren der technische Vorteil erzielt, dass eine optimale Partitionierung der Verbindungsentitäten und deren Schnittstellen bestimmt werden kann. Mit dem hier vorgestellten Verfahren können die Fertigungsmodule nicht nur einmal im Vorhinein bestimmt werden, sondern sie können auch dynamisch für jedes Fahrzeug neu und optimal bestimmt werden und in einer durchgängig digitalisierten Fertigung an die Automaten weitergegeben werden.

Gemäß einer beispielhaften Ausführungsform des Verfahrens werden die Verbindungsentitäten der Cluster untereinander über Punkt-zu-Punkt Verbindungen verbunden.

Damit wird der technische Vorteil erzielt, dass bereits wenige Verbindungen ausreichen, um die Verbindungsentitäten der Cluster und damit die Steckverbinder der Cluster untereinander zu verbinden.

Gemäß einer beispielhaften Ausführungsform des Verfahrens sind die Verbindungsentitäten des inneren Leitungssatzes entsprechenden Leitungssatzmodulen des äußeren Leitungssatzes zugeordnet, um die Leitungssatzmodule des äußeren Leitungssatzes über den inneren Leitungssatz untereinander zu verbinden.

Damit wird der technische Vorteil erzielt, dass über den inneren Leitungssatz alle Leitungssatzmodule des äußeren Leitungssatzes effizient miteinander verbunden werden können.

Gemäß einer beispielhaften Ausführungsform des Verfahrens sieht die Verbindungscharakteristik eine zumindest teilweise Vermaschung der Bordnetz-Entitäten untereinander über Leitungsbeziehungen vor.

Damit wird der technische Vorteil erzielt, dass bei teilweiser Vermaschung und insbesondere bei starker oder voller Vermaschung eine effiziente Aufteilung in Fertigungsmodule realisierbar ist.

Gemäß einer beispielhaften Ausführungsform umfasst das Verfahren ein Ausgliedern der Steckverbinder der ersten Bordnetz-Entität unter Nutzung eines Modells umfassend eine reelle Schicht und eine virtuelle Schicht, wobei die reduzierte Verbindungscharakteristik in der reellen Schicht erstellt wird und wobei die hilfsweise Verbindungscharakteristik in der virtuellen Schicht erstellt wird.

Damit wird der technische Vorteil erzielt, dass über die virtuelle Schicht eine effiziente Entflechtung vorgenommen werden kann, welche dann in der reellen Schicht realisiert werden kann.

Gemäß einer beispielhaften Ausführungsform umfasst das Verfahren ein Bestimmen der ersten Bordnetz-Entität als eine der Bordnetz-Entitäten des Bordnetzes, welche gemäß der Verbindungscharakteristik eine Vermaschung mit einer Anzahl von anderen Bordnetz-Entitäten des Bordnetzes aufweist, welche Anzahl einen Schwellwert übersteigt.

Damit wird der technische Vorteil erzielt, dass mit der Entflechtung einer solchen Bordnetz-Entität, welche eine starke Vermaschung aufweist, bereits eine effiziente Entflechtung vorgenommen werden kann.

Gemäß einer beispielhaften Ausführungsform des Verfahrens bestimmt die erste Bordnetz-Entität sich als eine Bordnetz-Entität des Bordnetzes, welche eine Vermaschung mit einer maximalen Anzahl von anderen Bordnetz-Entitäten des Bordnetzes aufweist.

Damit wird der technische Vorteil erzielt, dass mit der Entflechtung der Bordnetz-Entität, welche die höchste Vermaschung aufweist, das Verfahren effizient durchgeführt werden kann und bereits zu einer effizienten Entflechtung führt.

Gemäß einer beispielhaften Ausführungsform des Verfahrens umfasst die erste Bordnetz-Entität einen Stromverteiler oder ein Steuergerät des Bordnetzes.

Damit wird der technische Vorteil erzielt, dass mit der Entflechtung eines Stromverteilers oder eines Steuergeräts, welches die größte Anzahl von Verbindungen zu anderen Bordnetz-Entitäten aufweist, eine gute Entflechtung vorgenommen werden kann.

Gemäß einer beispielhaften Ausführungsform des Verfahrens entflechten die Verbindungsentitäten des inneren Leitungssatzes die Steckverbinder der in der hilfsweisen Verbindungscharakteristik ausgebildeten Cluster untereinander, so dass die Steckverbinder der Cluster in sich abgeschlossen sind und keine elektrischen Anschlussleitungen zu Steckverbindern anderer Cluster aufweisen.

Damit wird der technische Vorteil erzielt, dass die Steckverbinder der Cluster in sich abgeschlossen sind und über die ihnen zugeordneten Verbindungsentitäten verbunden werden können, ohne dass weitere Verbindungen notwendig sind. Dies führt zu einer effizienten Entflechtung und Produktion der in sich abgeschlossenen Fertigungsmodule.

Gemäß einer beispielhaften Ausführungsform des Verfahrens sind die Verbindungsentitäten des inneren Leitungssatzes als Data Power Interfaces, DPI, ausgebildet.

Damit wird der technische Vorteil erzielt, dass mittels den DPI und automatisiert gefertigten Leitungssatzmodulen bzw. den Fertigungsmodulen das Verfahren die Produkte des Bordnetzes der Zukunft sich effizient fertigen lassen.

Gemäß einer beispielhaften Ausführungsform des Verfahrens sind die Verbindungsentitäten des inneren Leitungssatzes über ein Verbindungs-Backbone untereinander verbunden.

Damit wird der technische Vorteil erzielt, dass über das Verbindungs-Backbone sich die Verbindungsentitäten der Cluster und damit die Steckverbinder der Cluster effizient untereinander verbinden lassen.

Gemäß einer beispielhaften Ausführungsform des Verfahrens erfolgt das Aufteilen der Steckverbinder der reduzierten Verbindungscharakteristik in eine Mehrzahl von Leitungssatzmodulen des äußeren Leitungssatzes gemäß einem ersten Adjazenzkriterium, welches eine Anzahl von Verbindungsbeziehungen der Steckverbinder untereinander angibt.

Damit wird der technische Vorteil erreicht, dass die Nachbarschaftsbeziehungen der Steckverbinder untereinander in der Modularisierung berücksichtigt werden.

Gemäß einer beispielhaften Ausführungsform des Verfahrens erfolgt das Aufteilen der Steckverbinder der reduzierten Verbindungscharakteristik in eine Mehrzahl von Leitungssatzmodulen des äußeren Leitungssatzes gemäß einem zweiten Adjazenzkriterium, welches für jeden Steckverbinder angibt, für welche Fahrzeug-Konfigurationen Anschlüsse für Verbindungsbeziehungen benötigt werden.

Damit wird der technische Vorteil erreicht, dass die verschiedenen Fahrzeug-Konfigurationen bzw. kundenspezifischen Sonderausstattungen in der Modularisierung berücksichtigt werden.

Gemäß einer beispielhaften Ausführungsform umfasst das Verfahren ein Auflösen von verbleibenden Verbindungen zwischen den Leitungssatzmodulen des äußeren Leitungssatzes nach dem Aufteilen der Steckverbinder der reduzierten Verbindungscharakteristik in die Mehrzahl von Leitungssatzmodulen des äußeren Leitungssatzes mittels Stecker-Modularisierung.

Damit wird der technische Vorteil erreicht, dass die restlichen Verbindungen über die Leitungssatzmodule hinweg sich effizient über Stecker-Modularisierung auflösen lassen.

Gemäß einem zweiten Aspekt wird die oben beschriebene Aufgabe gelöst durch einen modularen elektrischen Leitungssatz, umfassend: eine Mehrzahl von Leitungssatzmodulen, die einen äußeren Leitungssatz bilden, und die über einen inneren Leitungssatz miteinander verbunden sind, wobei der innere Leitungssatz Verbindungsentitäten umfasst, welche über Punkt-zu-Punkt Verbindungen miteinander verbunden sind, wobei die Verbindungsentitäten Clustern von Steckverbindern zugeordnet sind, welche auf einem entflochtenen elektrischen Leitungssatz eines Bordnetzes eines Fahrzeugs basieren.

Ein solcher modularisierter elektrischer Leitungssatz kann mit einem, wie oben beschriebenen Verfahren in vorteilhafter Weise gefertigt werden. Der modularisierte elektrische Leitungssatz bietet den technischen Vorteil einer effizienten Unterteilung in abgeschlossene Module und kann damit effizient mittels einer automatisierten Fertigung hergestellt werden.

Gemäß einer beispielhaften Ausführungsform des modularen elektrischen Leitungssatzes basiert der entflochtene elektrische Leitungssatz auf einer Ausgliederung der Steckverbinder einer ersten Bordnetz-Entität aus einer Verbindungscharakteristik eines elektrischen Leitungssatzes mit einer Mehrzahl von elektrischen Steckverbindern zum Verbinden von Bordnetz-Entitäten eines Bordnetzes eines Fahrzeugs.

Der modularisierte elektrische Leitungssatz verfügt über eine optimale Partitionierung der Verbindungsentitäten und deren Schnittstellen. Der modularisierte elektrische Leitungssatz lässt sich dynamisch für jedes Fahrzeug neu und optimal fertigen und in einer durchgängig digitalisierten Fertigung mittels Automaten produzieren.

Gemäß einem dritten Aspekt wird die oben beschriebene Aufgabe gelöst durch ein Computerprogramm mit einem Programmcode zum Ausführen des Verfahrens gemäß dem ersten Aspekt auf einem Computer.

Damit wird der technische Vorteil erreicht, dass das Computerprogramm einfach auf einer Steuerung, wie z.B. auf einem Mikrocontroller ausgeführt werden kann.

Kurze Figurenbeschreibung

Im Folgenden wird die Erfindung anhand von Ausführungsbeispielen und den Figuren näher beschrieben. Es zeigen:

Fig. 1  eine Darstellung der Vermaschung im Bordnetz über einen Graphen, die Knoten 110 entsprechen Steckern, die Kanten 120 entsprechen Leitungen, mit denen die Stecker verbunden sind;

Fig. 2  eine vereinfachte schematische Darstellung einer Verflechtung 200 von Bordnetzteilnehmern (Knoten) über Leitungsbeziehungen (Kanten) gemäß einem Ausführungsbeispiel;

Fig. 3  eine schematische Darstellung einer Verschiebung und Atomisierung 300 einer beispielhaften Stromverteiler-Entität auf den virtuellen Layer gemäß einem Ausführungsbeispiel;

Fig. 4  eine schematische Darstellung der Ausbildung von Verbindungsschwerpunkten (Cluster) 400 auf dem virtuellen Layer gemäß einem Ausführungsbeispiel;

Fig. 5  eine schematische Darstellung der Überführung 500 des inneren Leitungssatzes und der DPIs zurück auf die reelle Ebene (Layer) gemäß einem Ausführungsbeispiel; und

Fig. 6  eine schematische Darstellung eines erfindungsgemäßen Verfahrens 600 zum Entflechten eines elektrischen Leitungssatzes.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

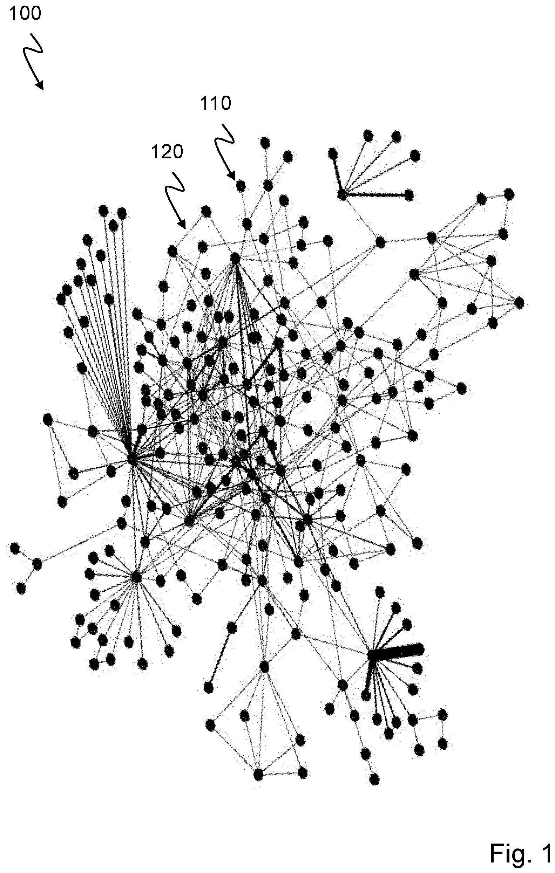

Fig. 1 zeigt eine Darstellung der Vermaschung im Bordnetz über einen Graphen. Die Knoten 110 entsprechen Steckern, die Kanten 120 entsprechen Leitungen, mit denen die Stecker verbunden sind.

Die Anordnung 100 zeigt die tiefe Vermaschung in konventionellen Bordnetzen. Das Bordnetz beinhaltet viele Steuerungsknoten 110 wie Bodycontroller, Klimaanlage, Infotainment, Schiebedach, Instrument-Cluster, Batteriemanagement-Systeme und Gateways.

Die elektrischen Komponenten sind durch den Kunden frei konfigurierbar, d.h. sie können beim Bestellvorgang softwareunterstützt ausgewählt oder weggelassen werden. Je nach kundenspezifischer Ausstattung, hier als Sonderausstattung (SA) bezeichnet, wird ein entsprechender Leitungssatz spezifiziert, der die dem individuellen Kundenwunsch entsprechende Auswahl der elektrischen Komponenten entspricht und für eine Verkabelung der ausgewählten Komponenten sorgt. In der industriellen Fertigung ist es vorteilhaft, wenn der Leitungssatz aus sich abgeschlossenen Modulen besteht, um den Aufwand für das (manuelle) Nachpinnen zu reduzieren. Die in dieser Offenbarung vorgestellten Verfahren, Anordnungen und Algorithmen zeigen auf, wie solch eine Modularisierung vorteilhaft erreicht werden kann.

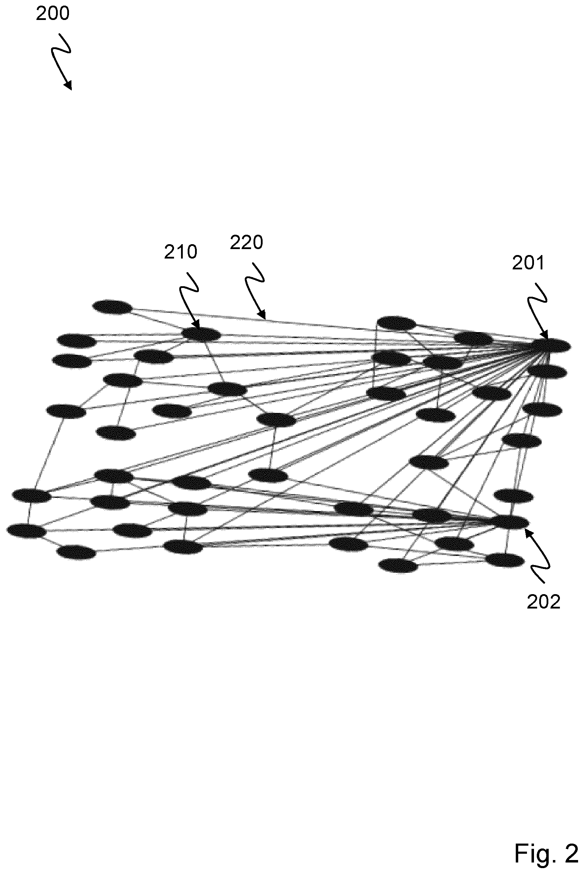

Fig. 2 zeigt eine reduzierte schematische Darstellung einer Verflechtung 200 von Bordnetzteilnehmern (Knoten) über Leitungsbeziehungen (Kanten) gemäß einem Ausführungsbeispiel.

Hinten rechts ist z.B. ein Stromverteiler 201 dargestellt, der Leitungen mit fast allen Bordnetzteilnehmern, d.h. den ellipsenförmig dargestellten Knoten, aufweist. Er ist damit Quelle von Vermaschung. Vorne rechts ist des Weiteren ein Steuergerät 202 dargestellt, das Verbindungen zu vielen Bordnetzteilnehmern hat.

Die in Figur 2 dargestellte Verflechtung 200 wird im Folgenden auch als eine Verbindungscharakteristik 200 bezeichnet, welche aufzeigt, wie die einzelnen Bordnetz-Entitäten 210, d.h. die ellipsenförmig dargestellten Knoten, über den elektrischen Leitungssatz 220 zu verbinden sind.

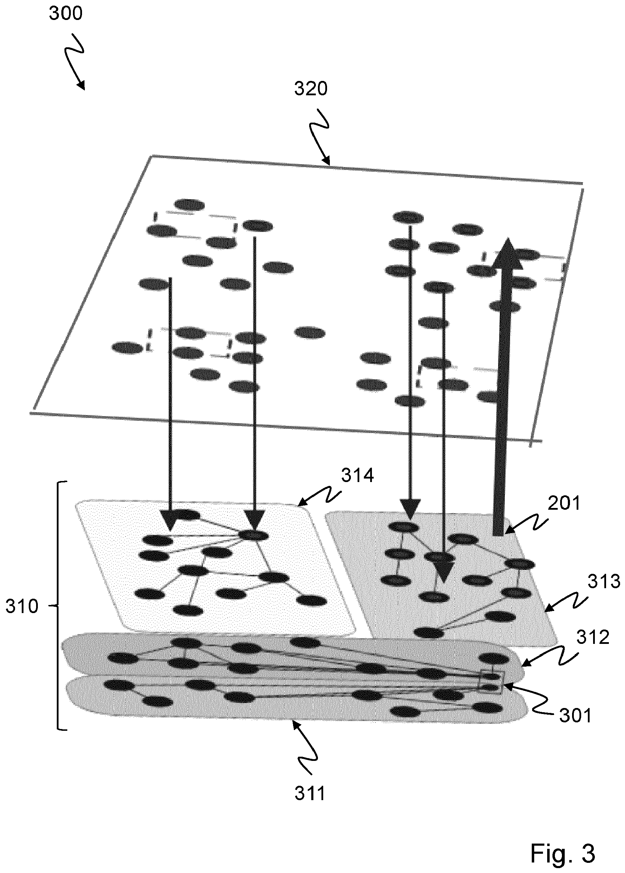

Fig. 3 zeigt eine schematische Darstellung einer Verschiebung und Atomisierung 300 einer beispielhaften Stromverteiler-Entität 201 auf den virtuellen Layer (Ebene) 320 gemäß einem Ausführungsbeispiel.

Es ist eine reelle Ebene bzw. Schicht 310 dargestellt, in der sich eine beispielhafte Anzahl von vier abgegrenzten Konglomeraten 311, 312, 313, 314 mit ihnen zugeordneten Bordnetz-Entitäten 210 befinden. Ferner ist eine virtuelle Ebene bzw. Schicht 320 dargestellt, welche eine Mehrzahl von Bordnetz-Entitäten 210 umfasst.

Alle Bordnetzteilnehmer bzw. Bordnetz-Entitäten 210 können sich ohne Vermaschung direkt von der virtuellen Ebene 320 für die Funktion 12V Versorgung bedienen. Die Vermaschung des Steuergerätes 202 vorne rechts (wie oben in Figur 2 dargestellt) wird durch eine Stecker-Modularisierung 301 aufgelöst. Mit der soweit aufgelösten Vermaschung können auf der reellen Ebene 310 Module über einen Modularisierungs-Algorithmus, wie im Folgenden näher beschrieben, gebildet werden.

## Modularisierung auf der reellen Ebene

Die Modularisierung auf der reellen Ebene 310 basiert auf dem Konzept, die Nachbarschaftsbeziehungen, im Folgenden auch Adjazenzen bezeichnet, der Steckverbinder untereinander sowie von den Steckverbindern zu den Sonderausstattungen, d.h. kundenspezifischen Konfigurationen, in geeigneter Weise auszunutzen, um eine effiziente Modularisierung vorzunehmen.

Das Konzept beruht insbesondere darauf, die Adjazenzmatrix der Steckerverbindungen mit der Adjazenzmatrix der Sonderausstattungs- (SA) Zugehörigkeit zu multiplizieren. Aus der resultierenden Adjazenz wird für jeden Stecker der Stecker mit der höchsten Affinität bestimmt. Diese Stecker-Paarungen kann man sich als "Dominosteine" vorstellen. Anschließend werden die "Dominosteine" algorithmisch angereiht. Dabei ergeben sich Cluster. Die Cluster haben untereinander minimal wenige Querverbindungen, die die Unabhängigkeit verletzen. Gibt es keine Querverbindungen, so sind abgeschlossene Cluster bzw. Module gefunden.

Die Modularisierung auf der reellen Ebene 310 mit einem solchen Algorithmus führt zu einer effizienteren Modularisierung, die dann auch für eine automatisierte Fertigung genutzt werden kann.

Die Modularisierung auf der reellen Ebene 310 führt zu einer elektrischen Verbindungsanordnung zum Anschließen von frei konfigurierbaren elektrischen Komponenten in einem Fahrzeug, wobei die elektrische Verbindungsanordnung eine Mehrzahl von elektrischen Steckverbindern umfasst, die über eine Mehrzahl von elektrischen Anschlussleitungen eines elektrischen Leitungssatzes gemäß einem ersten Adjazenzkriterium miteinander verbunden sind, wobei der Mehrzahl von Steckverbindern jeweils ein Konfigurationscode gemäß einem zweiten Adjazenzkriterium zugeordnet ist, wobei die Konfigurationscodes der Steckverbinder eine spezifische Konfiguration der frei konfigurierbaren elektrischen Komponenten des Fahrzeugs angeben, wobei die Mehrzahl von elektrischen Steckverbindern basierend auf einer Kombination des ersten Adjazenzkriteriums und des zweiten Adjazenzkriteriums in eine Mehrzahl von Fertigungsmodulen aufgeteilt ist.

Der Begriff "Adjazenz" bedeutet hierbei "Nachbarschaft" oder auch "Nachbarschaftsbeziehung". Mithilfe einer Adjazenzmatrix lassen sich Graphen mit ihren Knoten und Kanten in einer Matrix abbilden. Die Matrix speichert die Beziehungen der Knoten untereinander. Jeder Knoten repräsentiert in der Matrix eine Zeile und eine Spalte. Die Matrix ist bei einer Anzahl von N Knoten N x N groß. Die Einträge in den Spalten und Zeilen zeigen, ob Knoten miteinander verbunden sind. Die Zahl "0" steht für keine Verbindung (keine Kante), die Zahl "1" für eine existierende Verbindung. Adjazenzmatrizen lassen sich für verschiedene Arten von Graphen wie gerichtete Graphen, ungerichtete Graphen oder gewichtete Graphen verwenden. Bei gewichteten Graphen stehen nicht die Werte "0" oder "1", sondern Zahlen als Gewichtungen in der Matrix. Die Adjazenzmatrix verbindet die Graphentheorie mit der linearen Algebra.

Bei den hier beschriebenen Adjazenzkriterien bzw. Adjazenzmatrizen werden die Knoten durch elektrische Steckverbinder bzw. Stecker gebildet und die Kanten durch elektrische Leitungen des Leitungssatzes, welche die Steckverbinder miteinander verbinden oder die elektrischen Komponenten der kundenspezifischen Sonderausstattung anschließen.

Eine elektrische Verbindungsanordnung, die auf solche Weise modularisiert ist, d.h. basierend auf einem ersten Adjazenzkriterium, welches die Nachbarschaftsbeziehungen der Steckverbinder untereinander berücksichtigt, und einem zweiten Adjazenzkriterium, welches die Nachbarschaftsbeziehungen der Stecker zu den Sonderausstattungen, d.h. kundenspezifischen Konfigurationen berücksichtigt, bringt eine besonders effiziente Modularisierung. Die elektrische Verbindungsanordnung und der zugehörige Leitungssatz lassen sich damit auch auf effiziente Weise in automatisierter Fertigung herstellen.

Die Fertigungsmodule können dann jeweils Paare von Steckverbindern umfassen, deren kombinierte Adjazenz bezüglich des ersten Adjazenzkriteriums und des zweiten Adjazenzkriteriums innerhalb gleicher Bereiche liegt. Damit wird der technische Vorteil erreicht, dass aus der resultierenden Adjazenz, d.h. der kombinierten Adjazenz bezüglich des ersten Adjazenzkriteriums und des zweiten Adjazenzkriteriums für jeden Stecker der Stecker mit der höchsten Affinität bestimmt werden kann. Diese Stecker-Paarungen können dann in Custer bzw. Bereiche mit ähnlicher Adjazenz angeordnet werden. Diese Cluster haben untereinander minimal wenige Querverbindungen, die die Unabhängigkeit verletzen. Gibt es keine Querverbindungen, so sind abgeschlossene Cluster bzw. Module gefunden. Damit kann der Leitungssatz auf besonders effiziente Weise in automatischer Fertigung hergestellt werden. Bei wenigen Querverbindungen ist nur ein geringes Nachpinnen erforderlich, bei keinen Querverbindungen ist kein Nachpinnen mehr erforderlich.

Das erste Adjazenzkriterium kann auf eine Stecker-Adjazenzmatrix basieren, die eine Anzahl von Verbindungsbeziehungen der Steckverbinder untereinander angibt. Damit wird der technische Vorteil erreicht, dass die Nachbarschaftsbeziehungen der Stecker untereinander in der Modularisierung berücksichtigt werden.

Das zweite Adjazenzkriterium kann beispielsweise auf einer Konfigurationmatrix basieren, die für jeden Steckverbinder angibt, insbesondere mittels eines Bits, für welche Konfigurationen Anschlüsse für Verbindungsbeziehungen benötigt werden. Damit wird der technische Vorteil erreicht, dass die verschiedenen Konfigurationen bzw. kundenspezifischen Sonderausstattungen in der Modularisierung berücksichtigt werden.

Die Konfigurationmatrix kann eine Gewichtung der Konfigurationscodes entsprechend einer Auftretenshäufigkeit der jeweiligen Konfigurationscodes umfassen. Damit wird der technische Vorteil erreicht, dass Konfigurationen bzw. kundenspezifische Sonderausstattungen, die häufiger vorkommen, eine stärkere Gewichtung in der Konfigurationsmatrix erhalten und damit in der Modularisierung ein höheres Gewicht haben.

Das zweite Adjazenzkriterium kann auf einer Konfigurations-Adjazenzmatrix basieren, die sich für Kombinationen von Steckverbinder-Paaren aus dem Skalarprodukt zweier entsprechender Spalten der Konfigurationmatrix bestimmt. Damit wird der technische Vorteil erreicht, dass die Nachbarschaftsbeziehungen der jeweiligen Konfigurationen bzw. kundenspezifischen Sonderausstattungen in der Modularisierung berücksichtigt werden.

Die Modularisierung auf der reellen Ebene 310 kann als Algorithmus implementiert werden, welcher die folgenden Rechenoperationen ausgeführt:

1) Bestimmen der Adjazenzmatrix $A_{ST}$ der Steckverbindungen;

2) Berechnen der SA (Sonderausstattungs-) Adjazenzmatrix:

$$A_{SA}(Si/Sj) = SA(Si) * SA(Sj);$$

3) Berechnung der resultierenden Adjazenzmatrix:

$$A_{RE} = A_{ST} \bullet A_{SA};$$

4) Berechnung der Zweier-Tupel mit der höchsten resultierenden Adjazenz:

$$[S_i, S_j] = A_{RE}(S_i(S_{j\_max}), S_j);$$

5) Sortierung nach dem Kriterium, dass gleiche Tupelelemente vorhanden sind:
Sort: $S_{i\_n} = S_{j\_m} \cup S_{i\_m} = S_{j\_n}$.

Dabei bezeichnen:

* das Skalarprodukt,
• das elementweise Produkt; und
U die Vereinigungsmenge.

Figur 3 zeigt auch das Ausgliedern der Steckverbinder einer ersten Bordnetz-Entität 201 am Beispiel des in Figur 2 dargestellten Stromverteilers 201 aus der Verbindungscharakteristik 200, wie in Figur 2 dargestellt, zum Erstellen einer reduzierten Verbindungscharakteristik auf der reellen Ebene 310 ohne die ausgegliederten Steckverbinder und einer hilfsweisen Verbindungscharakteristik auf der virtuellen Ebene 320 mit den ausgegliederten Steckverbinder.

Ferner zeigt Figur 3 das Aufteilen der Steckverbinder der reduzierten Verbindungscharakteristik in eine Mehrzahl von Leitungsmodulen 311, 312, 313, 314 eines äußeren Leitungssatzes, der sich auf der reellen Ebene 310 befindet. Dieses Aufteilen der Steckverbinder der reduzierten Verbindungscharakteristik in eine Mehrzahl von Leitungsmodulen 311, 312, 313, 314 eines äußeren Leitungssatzes entspricht der oben beschriebenen Modularisierung auf der reellen Ebene 310. Der äußere Leitungssatz umfasst somit die Leitungsmodule 311, 312, 313, 314, wie in Figur 3 dargestellt. Der innere Leitungssatz wird über die virtuelle Ebene 320 gebildet, wie in den folgenden Figuren näher beschrieben. Das Bezugszeichen 310 in Figur 3 dient im Folgenden zur Bezeichnung der reellen Ebene, aber gleichzeitig auch zur Bezeichnung der reduzierten Verbindungscharakteristik. Ebenso dient das Bezugszeichen 320 in Figur 3 zur Bezeichnung der virtuellen Ebene, aber gleichzeitig auch zur Bezeichnung der hilfsweisen Verbindungscharakteristik.

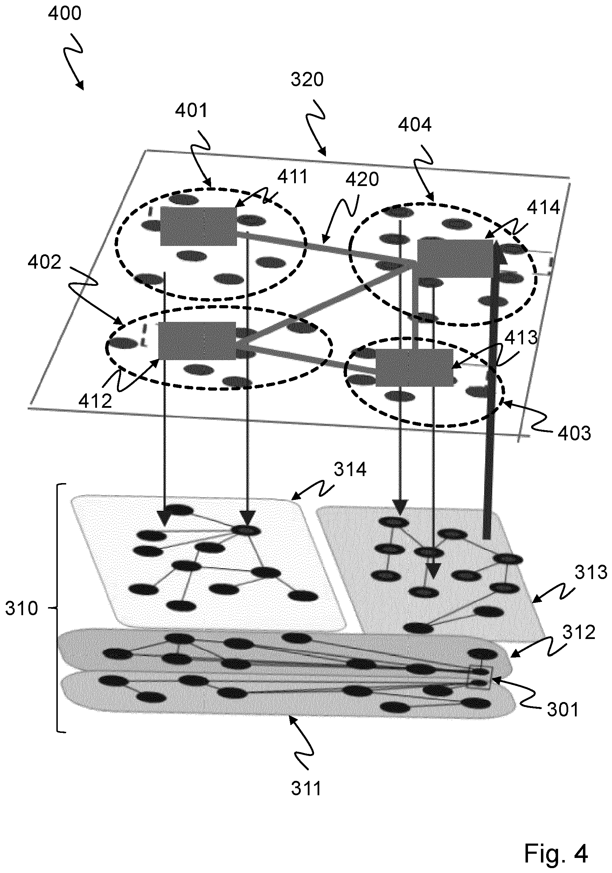

Fig. 4 zeigt eine schematische Darstellung der Ausbildung 400 von Verbindungschwerpunkten (Cluster) 401, 402, 403, 404 auf dem virtuellen Layer 320 gemäß einem Ausführungsbeispiel.

Diese werden nun pro Cluster 401, 402, 403, 404 mit einem DPI bzw. einer Verbindungsentität 411, 412, 413, 414 besetzt, das einen Teil der Entitäts-Funktion abbildet. Auf diese Weise können Stromverteiler (wie z.B. der Stromverteiler 201 aus Figur 1) aber auch große Steuergeräte (wie z.B. das Steuergerät 202 aus Figur 1) optimal aufgeteilt werden. Die so hergeleiteten DPI 411, 412, 413, 414 benötigen untereinander einen Verbindungs-Backbone 420, der die Verbindungen der auf die DPIs 411, 412, 413, 414 verteilten und zerlegten Entitäten wiederherstellt. Diese Verbindungen bilden den "inneren Leitungssatz".

Das Data Power Interface (DPI) kann die elektrischen Anschlussleitungen (z.B. Daten und Power Leitungen) der an das DPI angeschlossenen Bordnetz-Entitäten untereinander entflechten, so dass in sich abgeschlossene Module entstehen, die keine elektrischen Anschlussleitungen zu anderen Modulen aufweisen. Das DPI kann beispielsweise als elektrischer Schaltkreis realisiert sein, das verschiedene Ein- und Ausgänge aufweist sowie eine Logik zur Steuerung der Beziehungen zwischen den Ein- und Ausgängen.

Figur 4 zeigt damit das Bestimmen von Clustern 401, 402, 403, 404 von Steckverbindern in der hilfsweisen Verbindungscharakteristik 320 bzw. der virtuellen Ebene 320. Ferner wird das Ausformen einer Verbindungsentität 411, 412, 413, 414 für einen jeden Cluster 401, 402, 403, 404 zum Verbinden der Steckverbinder des jeweiligen Clusters dargestellt. Die Verbindungsentitäten 411, 412, 413, 414 der Cluster 401, 402, 403, 404 werden untereinander verbunden zum Ausformen des inneren Leitungssatzes.

Die Verbindungsentitäten 411, 412, 413, 414 der Cluster 401, 402, 403, 404 können untereinander über Punkt-zu-Punkt Verbindungen 420 verbunden werden. Diese Punkt-zu-Punkt Verbindungen 420 bilden das Verbindungs-Backbone.

Die Verbindungsentitäten 411, 412, 413, 414 des inneren Leitungssatzes sind entsprechenden Leitungssatzmodulen 311, 312, 313, 314 des äußeren Leitungssatzes zugeordnet, um die Leitungssatzmodule des äußeren Leitungssatzes über den inneren Leitungssatz untereinander zu verbinden.

Die Verbindungsentitäten 411, 412, 413, 414 des inneren Leitungssatzes entflechten die Steckverbinder der in der hilfsweisen Verbindungscharakteristik 320 ausgebildeten Cluster 401, 402, 403, 404 untereinander, so dass die Steckverbinder der Cluster in sich abgeschlossen sind und keine elektrischen Anschlussleitungen zu Steckverbindern anderer Cluster aufweisen.

Verbleibende Verbindungen zwischen den Leitungssatzmodulen 311, 312, 313, 314 des äußeren Leitungssatzes können nach dem Aufteilen der Teckverbinder der reduzierten Verbindungscharakteristik 310 in die Mehrzahl von Leitungssatzmodulen 311, 312, 313, 314 mittels Stecker-Modularisierung 301 aufgeteilt werden.

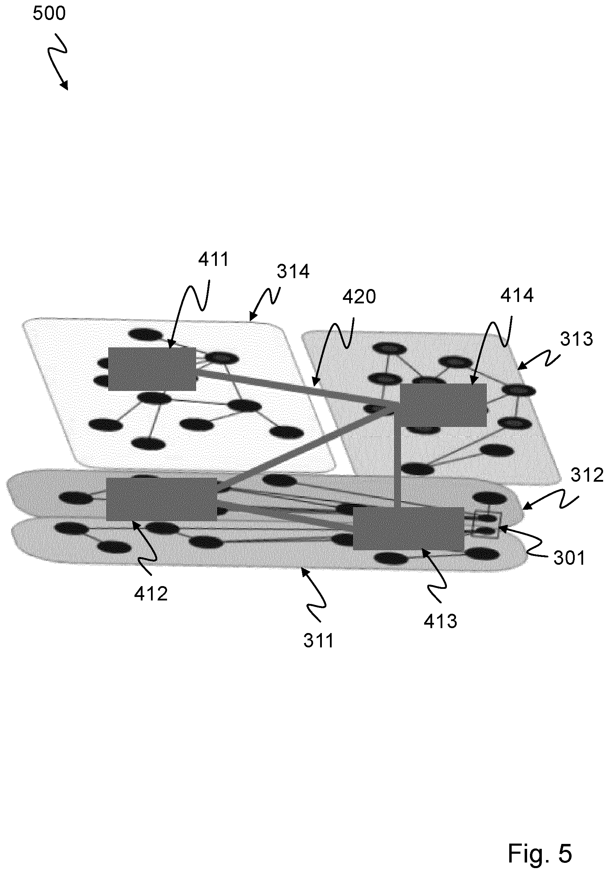

Fig. 5 zeigt eine schematische Darstellung der Überführung 500 des inneren Leitungssatzes und der DPIs 411, 412, 413, 414 zurück auf die reelle Ebene (Layer) 310 gemäß einem Ausführungsbeispiel.

Das Ergebnis sind nun automatisierbare Leitungssatzmodule (äußerer Leitungssatz), die über DPI 411, 412, 413, 414 und den inneren Leitungssatz bestehend aus Punkt zu Punkt Backbone-Verbindungen miteinander verbunden sind.

Figur 5 zeigt aber auch einen modularen elektrischen Leitungssatz 500, umfassend: eine Mehrzahl von Leitungssatzmodulen 311, 312, 313, 314, die einen äußeren Leitungssatz bilden, und die über einen inneren Leitungssatz miteinander verbunden sind. Der innere Leitungssatz umfasst Verbindungsentitäten 411, 412, 413, 414, welche über Punkt-zu-Punkt Verbindungen 420 miteinander verbunden sind. Die Verbindungsentitäten sind Clustern 401, 402, 403, 404 von Steckverbindern zugeordnet (wie oben zu Figur 4 dargestellt), welche auf einem entflochtenen elektrischen Leitungssatz eines Bordnetzes eines Fahrzeugs basieren.

Der entflochtene elektrische Leitungssatz kann auf einer Ausgliederung der Steckverbinder einer ersten Bordnetz-Entität 201 aus einer Verbindungscharakteristik 200 eines elektrischen Leitungssatzes mit einer Mehrzahl von elektrischen Steckverbindern zum Verbinden von Bordnetz-Entitäten eines Bordnetzes eines Fahrzeugs basieren, wie oben zu den Figuren 2 bis 4 beschrieben.

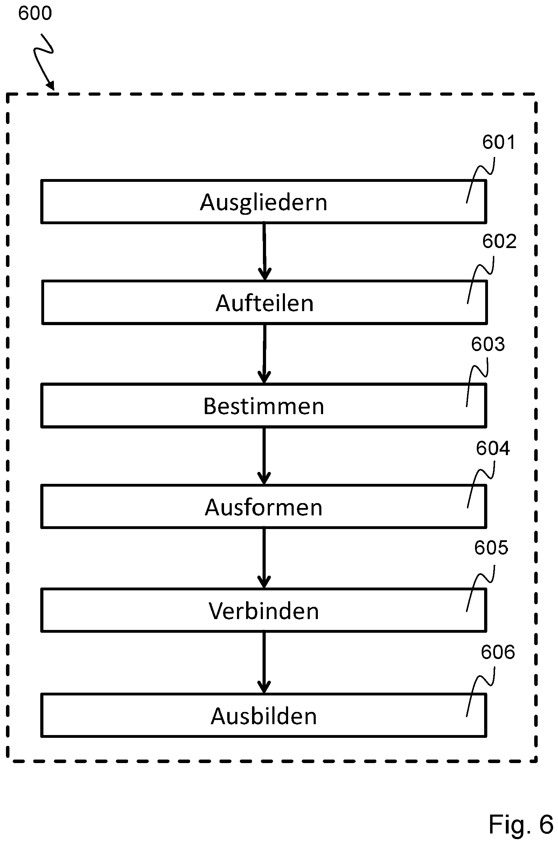

Fig. 6 zeigt eine schematische Darstellung eines erfindungsgemäßen Verfahrens 600 zum Entflechten eines elektrischen Leitungssatzes 220 mit einer Mehrzahl von elektrischen Steckverbindern zum Verbinden von Bordnetz-Entitäten 210 eines Bordnetzes eines Fahrzeugs gemäß einer Verbindungscharakteristik 200, wie z.B. näher in Figur 2 dargestellt.

Das Verfahren 600 umfasst die folgenden Schritte:

Ausgliedern 601 der Steckverbinder einer ersten Bordnetz-Entität 201 aus der Verbindungscharakteristik 200 zum Erstellen einer reduzierten Verbindungscharakteristik 310 ohne die ausgegliederten Steckverbinder sowie einer hilfsweisen Verbindungscharakteristik 320 mit den ausgegliederten Steckverbindern, wie beispielsweise zu Figur 3 beschrieben;

Aufteilen 602 der Steckverbinder der reduzierten Verbindungscharakteristik 310 in eine Mehrzahl von Leitungssatzmodulen 311, 312, 313, 314 eines äußeren Leitungssatzes, wie beispielsweise zu Figur 3 beschrieben;

Bestimmen 603 von Clustern 401, 402, 403, 404 von Steckverbindern in der hilfsweisen Verbindungscharakteristik 320, wie beispielsweise zu Figur 3 beschrieben;

Ausformen 604 einer Verbindungsentität 411, 412, 413, 414 für einen jeden Cluster 401, 402, 403, 404 zum Verbinden der Steckverbinder des jeweiligen Clusters, wie beispielsweise zu Figur 4 beschrieben;

Verbinden 605 der Verbindungsentitäten 411, 412, 413, 414 der Cluster 401, 402, 403, 404 untereinander zum Ausformen eines inneren Leitungssatzes, wie beispielsweise zu Figur 4 beschrieben;

Ausbilden 606 von Fertigungsmodulen basierend auf der Mehrzahl von Leitungssatzmodulen 311, 312, 313, 314 des äußeren Leitungssatzes und den Verbindungsentitäten 411, 412, 413, 414 des inneren Leitungssatzes, wie beispielsweise zu Figur 5 beschrieben.

Die Verbindungsentitäten 411, 412, 413, 414 der Cluster 401, 402, 403, 404 können untereinander über Punkt-zu-Punkt Verbindungen 420 verbunden werden.

Die Verbindungsentitäten 411, 412, 413, 414 des inneren Leitungssatzes können entsprechenden Leitungssatzmodulen 311, 312, 313, 314 des äußeren Leitungssatzes zugeordnet sein, um die Leitungssatzmodule des äußeren Leitungssatzes über den inneren Leitungssatz untereinander zu verbinden, wie beispielsweise zu Figur 4 beschrieben.

Die Verbindungscharakteristik 200 kann eine zumindest teilweise Vermaschung der Bordnetz-Entitäten 210 untereinander über Leitungsbeziehungen vorsehen, wie beispielsweise zu Figur 2 beschrieben.

Das Verfahren 600 kann ferner ein Ausgliedern der Steckverbinder der ersten Bordnetz-Entität 201 umfassen unter Nutzung eines Modells umfassend eine reelle Schicht 310 und eine virtuelle Schicht 320, wobei die reduzierte Verbindungscharakteristik in der reellen Schicht 310 erstellt wird und wobei die hilfsweise Verbindungscharakteristik in der virtuellen Schicht 320 erstellt wird, wie beispielsweise zu Figuren 3 und 4 beschrieben.

Das Verfahren 600 kann ferner als weiteren Schritt umfassen: Bestimmen der ersten Bordnetz-Entität 201 als eine der Bordnetz-Entitäten 210 des Bordnetzes, welche gemäß der Verbindungscharakteristik 200 eine Vermaschung mit einer Anzahl von anderen Bordnetz-Entitäten 210 des Bordnetzes aufweist, welche Anzahl einen Schwellwert übersteigt.

Die erste Bordnetz-Entität 201 kann sich als eine Bordnetz-Entität des Bordnetzes bestimmen, welche eine Vermaschung mit einer maximalen Anzahl von anderen Bordnetz-Entitäten 210 des Bordnetzes aufweist, wie beispielsweise zu Figur 2 dargestellt.

Die erste Bordnetz-Entität 201 kann einen Stromverteiler 201 oder ein Steuergerät 202 des Bordnetzes umfassen, wie beispielsweise zu Figur 2 beschrieben.

Die Verbindungsentitäten bzw. DPIs 411, 412, 413, 414 des inneren Leitungssatzes können die Steckverbinder der in der hilfsweisen Verbindungscharakteristik 320 ausgebildeten Cluster 401, 402, 403, 404 untereinander entflechten, so dass die Steckverbinder der Cluster in sich abgeschlossen sind und keine elektrischen Anschlussleitungen zu Steckverbindern anderer Cluster aufweisen.

Die Verbindungsentitäten 411, 412, 413, 414 des inneren Leitungssatzes können insbesondere als Data Power Interfaces, DPI, ausgebildet sein, wie oben beschrieben.

Die Verbindungsentitäten 411, 412, 413, 414 des inneren Leitungssatzes können über ein Verbindungs-Backbone 420 untereinander verbunden werden.

Das Aufteilen der Steckverbinder der reduzierten Verbindungscharakteristik 310 in eine Mehrzahl von Leitungssatzmodulen 311, 312, 313, 314 des äußeren Leitungssatzes kann beispielsweise gemäß einem ersten Adjazenzkriterium erfolgen, welches eine Anzahl von Verbindungsbeziehungen der Steckverbinder untereinander angibt.

Das Aufteilen der Steckverbinder der reduzierten Verbindungscharakteristik 310 in eine Mehrzahl von Leitungssatzmodulen 311, 312, 313, 314 des äußeren Leitungssatzes kann auch gemäß einem zweiten Adjazenzkriterium erfolgen, welches für jeden Steckverbinder angibt, für welche Fahrzeug-Konfigurationen Anschlüsse für Verbindungsbeziehungen benötigt werden.

Das Verfahren 600 kann ferner einen weiteren Schritt umfassen: Auflösen von verbleibenden Verbindungen zwischen den Leitungssatzmodulen 311, 312, 313, 314 des äußeren Leitungssatzes nach dem Aufteilen der Steckverbinder der reduzierten Verbindungscharakteristik 310 in die Mehrzahl von Leitungssatzmodulen 311, 312, 313, 314 des äußeren Leitungssatzes mittels Stecker-Modularisierung 301, wie beispielsweise zu Figur 3 und 4 beschrieben.

Das Verfahren 600 lässt sich als Algorithmus implementieren, der durch einen Programmcode eines Computerprogramms auf einem Computer oder Prozessor, beispielsweise einem Steuerrechner, ausgeführt werden kann.

BEZUGSZEICHENLISTE

| | |
|---|---|
| 100 | Darstellung der Vermaschung im Bordnetz über einen Graphen |
| 110 | Knoten bzw. Stecker |
| 120 | Kanten bzw. Leitungen, mit denen die Stecker verbunden sind |
| 200 | Verbindungscharakteristik |
| 201 | erste Bordnetz-Entität bzw. Stromverteiler |
| 202 | Steuergerät |
| 210 | Bordnetz-Entitäten |
| 220 | elektrischer Leitungssatz |
| 300 | Verschiebung und Atomisierung einer Bordnetz-Entität auf den virtuellen Layer |
| 301 | Stecker-Modularisierung |
| 310 | reelle Ebene oder Schicht bzw. reduzierte Verbindungscharakteristik |
| 311 | erstes Leitungssatzmodul |
| 312 | zweites Leitungssatzmodul |
| 313 | drittes Leitungssatzmodul |
| 314 | viertes Leitungssatzmodul |
| 320 | virtuelle Ebene oder Schicht bzw. hilfsweise Verbindungscharakteristik |
| 400 | Ausbildung von Verbindungschwerpunkten auf dem virtuellen Layer |
| 401 | erster Cluster |
| 402 | zweiter Cluster |
| 403 | dritter Cluster |
| 404 | vierter Cluster |
| 411 | erste Verbindungsentität |
| 412 | zweite Verbindungsentität |
| 413 | dritte Verbindungsentität |
| 414 | vierte Verbindungsentität |
| 420 | Punkt-zu-Punkt Verbindungen bzw. Verbindungs-Backbone |
| 600 | Verfahren zum Entflechten eines elektrischen Leitungssatzes |
| 601 | erster Schritt: Ausgliedern |
| 602 | zweiter Schritt: Aufteilen |
| 603 | dritter Schritt: Bestimmen |
| 604 | vierter Schritt: Ausformen |
| 605 | fünfter Schritt: Verbinden |
| 606 | sechster Schritt: Ausbilden |

**Patentansprüche**

1. Verfahren (600) zum Entflechten eines elektrischen Leitungssatzes (220) mit einer Mehrzahl von elektrischen Steckverbindern zum Verbinden von Bordnetz-Entitäten (210) eines Bordnetzes eines Fahrzeugs gemäß einer Verbindungscharakteristik (200), wobei das Verfahren (600) folgendes umfasst:

   Ausgliedern (601) der Steckverbinder einer ersten Bordnetz-Entität (201) aus der Verbindungscharakteristik (200) zum Erstellen einer reduzierten Verbindungscharakteristik (310) ohne die ausgegliederten Steckverbinder sowie einer hilfsweisen Verbindungscharakteristik (320) mit den ausgegliederten Steckverbindern;
   Aufteilen (602) der Steckverbinder der reduzierten Verbindungscharakteristik (310) in eine Mehrzahl von Leitungssatzmodulen (311, 312, 313, 314) eines äußeren Leitungssatzes;
   Bestimmen (603) von Clustern (401, 402, 403, 404) von Steckverbindern in der hilfsweisen Verbindungscharakteristik (320);
   Ausformen (604) einer Verbindungsentität (411, 412, 413, 414) für einen jeden Cluster (401, 402, 403, 404) zum Verbinden der Steckverbinder des jeweiligen Clusters;
   Verbinden (605) der Verbindungsentitäten (411, 412, 413, 414) der Cluster (401, 402, 403, 404) untereinander zum Ausformen eines inneren Leitungssatzes; und
   Ausbilden (606) von Fertigungsmodulen basierend auf der Mehrzahl von Leitungssatzmodulen (311, 312, 313, 314) des äußeren Leitungssatzes und den Verbindungsentitäten (411, 412, 413, 414) des inneren Leitungssatzes.

2. Verfahren (600) nach Anspruch 1,
wobei die Verbindungsentitäten (411, 412, 413, 414) der Cluster (401, 402, 403, 404) untereinander über Punkt-zu-Punkt Verbindungen (420) verbunden werden.

3. Verfahren (600) nach Anspruch 1 oder 2,
wobei die Verbindungsentitäten (411, 412, 413, 414) des inneren Leitungssatzes entsprechenden Leitungssatzmodulen (311, 312, 313, 314) des äußeren Leitungssatzes zugeordnet sind, um die Leitungssatzmodule des äußeren Leitungssatzes über den inneren Leitungssatz untereinander zu verbinden.

4. Verfahren (600) nach einem der vorstehenden Ansprüche,
wobei die Verbindungscharakteristik (200) eine zumindest teilweise Vermaschung der Bordnetz-Entitäten (210) untereinander über Leitungsbeziehungen vorsieht.

5. Verfahren (600) nach einem der vorstehenden Ansprüche, umfassend:
Ausgliedern der Steckverbinder der ersten Bordnetz-Entität (201) unter Nutzung eines Modells umfassend eine reelle Schicht (310) und eine virtuelle Schicht (320), wobei die reduzierte Verbindungscharakteristik in der reellen Schicht (310) erstellt wird und wobei die hilfsweise Verbindungscharakteristik in der virtuellen Schicht (320) erstellt wird.

6. Verfahren (600) nach einem der vorstehenden Ansprüche, umfassend:
Bestimmen der ersten Bordnetz-Entität (201) als eine der Bordnetz-Entitäten (210) des Bordnetzes, welche gemäß der Verbindungscharakteristik (200) eine Vermaschung mit einer Anzahl von anderen Bordnetz-Entitäten (210) des Bordnetzes aufweist, welche Anzahl einen Schwellwert übersteigt.

7. Verfahren (600) nach Anspruch 6,
wobei die erste Bordnetz-Entität (201) sich als eine Bordnetz-Entität des Bordnetzes bestimmt, welche eine Vermaschung mit einer maximalen Anzahl von anderen Bordnetz-Entitäten (210) des Bordnetzes aufweist.

8. Verfahren (600) nach einem der vorstehenden Ansprüche,
wobei die erste Bordnetz-Entität (201) einen Stromverteiler (201) oder ein Steuergerät (202) des Bordnetzes umfasst.

9. Verfahren (600) nach einem der vorstehenden Ansprüche,
wobei die Verbindungsentitäten (411, 412, 413, 414) des inneren Leitungssatzes die Steckverbinder der in der hilfsweisen Verbindungscharakteristik (320) ausgebildeten Cluster (401, 402, 403, 404) untereinander entflechten, so dass die Steckverbinder der Cluster in sich abgeschlossen sind und keine elektrischen Anschlussleitungen zu Steckverbindern anderer Cluster aufweisen.

10. Verfahren (600) nach einem der vorstehenden Ansprüche,
wobei die Verbindungsentitäten (411, 412, 413, 414) des inneren Leitungssatzes als Data Power Interfaces, DPI, ausgebildet sind.

11. Verfahren (600) nach einem der vorstehenden Ansprüche,
wobei die Verbindungsentitäten (411, 412, 413, 414) des inneren Leitungssatzes über ein Verbindungs-Backbone (420) untereinander verbunden sind.

12. Verfahren (600) nach einem der vorstehenden Ansprüche,
wobei das Aufteilen der Steckverbinder der reduzierten Verbindungscharakteristik (310) in eine Mehrzahl von Leitungssatzmodulen (311, 312, 313, 314) des äußeren Leitungssatzes gemäß einem ersten Adjazenzkriterium erfolgt, welches eine Anzahl von Verbindungsbeziehungen der Steckverbinder untereinander angibt.

13. Verfahren (600) nach einem der vorstehenden Ansprüche,
wobei das Aufteilen der Steckverbinder der reduzierten Verbindungscharakteristik (310) in eine Mehrzahl von Leitungssatzmodulen (311, 312, 313, 314) des äußeren Leitungssatzes gemäß einem zweiten Adjazenzkriterium erfolgt, welches für jeden Steckverbinder angibt, für welche Fahrzeug-Konfigurationen Anschlüsse für Verbindungsbeziehungen benötigt werden.

14. Verfahren (600) nach einem der vorstehenden Ansprüche, umfassend:
Auflösen von verbleibenden Verbindungen zwischen den Leitungssatzmodulen (311, 312, 313, 314) des äußeren Leitungssatzes nach dem Aufteilen der Steckverbinder der reduzierten Verbindungscharakteristik (310) in die Mehrzahl von Leitungssatzmodulen (311, 312, 313, 314) des äußeren Leitungssatzes mittels Stecker-Modularisierung (301).

15. Modularer elektrischer Leitungssatz (500), umfassend:

eine Mehrzahl von Leitungssatzmodulen (311, 312, 313, 314), die einen äußeren Leitungssatz bilden, und die über einen inneren Leitungssatz miteinander verbunden sind,

wobei der innere Leitungssatz Verbindungsentitäten (411, 412, 413, 414) umfasst, welche über Punkt-zu-Punkt Verbindungen (420) miteinander verbunden sind,

wobei die Verbindungsentitäten Clustern (401, 402, 403, 404) von Steckverbindern zugeordnet sind, welche auf einem entflochtenen elektrischen Leitungssatz eines Bordnetzes eines Fahrzeugs basieren.

**16.** Modularer elektrischer Leitungssatz (500) nach Anspruch 15,

wobei der entflochtene elektrische Leitungssatz auf einer Ausgliederung der Steckverbinder einer ersten Bordnetz-Entität (201) aus einer Verbindungscharakteristik (200) eines elektrischen Leitungssatzes mit einer Mehrzahl von elektrischen Steckverbindern zum Verbinden von Bordnetz-Entitäten eines Bordnetzes eines Fahrzeugs basiert.

**17.** Computerprogramm mit einem Programmcode zum Ausführen des Verfahrens (600) gemäß einem der Ansprüche 1 bis 14 auf einem Computer.

Fig. 1

Fig. 2

Fig. 3

Fig. 4

Fig. 5

600

601

Ausgliedern

602

Aufteilen

603

Bestimmen

604

Ausformen

605

Verbinden

606

Ausbilden

Fig. 6

Europäisches
Patentamt

European
Patent Office

Office européen
des brevets

**EUROPÄISCHER RECHERCHENBERICHT**

Nummer der Anmeldung

EP 22 18 2963

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 457 741 B2 (YAZAKI CORP [JP]) 4. Oktober 2016 (2016-10-04) * Spalte 5, Zeile 60 – Spalte 7, Zeile 2 * * Spalte 13, Zeile 40 – Spalte 18, Zeile 40; Abbildungen 1,2,12-17 * * Zusammenfassung * ----- | 1-17 | INV. B60R16/02 B60R16/03 H01B13/012 |
| X | DE 198 52 560 A1 (FRAUNHOFER GES FORSCHUNG [DE]) 1. Juli 1999 (1999-07-01) * Seite 1, Zeile 5 – Zeile 6 * * Seite 4, Zeile 2 – Seite 5, Zeile 66; Abbildungen 1-7 * * Zusammenfassung * ----- | 1-17 | |
| X | DE 10 2018 131199 A1 (DRAEXLMAIER LISA GMBH [DE]) 10. Juni 2020 (2020-06-10) * Absätze [0001], [0013] – [0045]; Abbildungen 4-15 * * Zusammenfassung * ----- | 1-17 | |
| A | US 2020/162341 A1 (VASSEUR JEAN-PHILIPPE [FR] ET AL) 21. Mai 2020 (2020-05-21) * Zusammenfassung; Abbildungen 1-5 * ----- | 1-17 | RECHERCHIERTE SACHGEBIETE (IPC) B60R H01B |

Der vorliegende Recherchenbericht wurde für alle Patentansprüche erstellt

| Recherchenort | Abschlußdatum der Recherche | Prüfer |
|---|---|---|
| Berlin | 12. Dezember 2022 | Wauters, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 18 2963

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2022

| Im Recherchenbericht angeführtes Patentdokument | Datum der Veröffentlichung | Mitglied(er) der Patentfamilie | Datum der Veröffentlichung |
|---|---|---|---|
| US 9457741 B2 | 04-10-2016 | CN 105322316 A<br>DE 102015211007 A1<br>US 2015360627 A1 | 10-02-2016<br>17-12-2015<br>17-12-2015 |
| DE 19852560 A1 | 01-07-1999 | KEINE | |
| DE 102018131199 A1 | 10-06-2020 | CN 113260537 A<br>DE 102018131199 A1<br>EP 3891021 A1<br>US 2022118924 A1<br>WO 2020114726 A1 | 13-08-2021<br>10-06-2020<br>13-10-2021<br>21-04-2022<br>11-06-2020 |
| US 2020162341 A1 | 21-05-2020 | KEINE | |

EPO FORM P0461

Für nähere Einzelheiten zu diesem Anhang : siehe Amtsblatt des Europäischen Patentamts, Nr.12/82